(19) Europäisches Patentamt
European Patent Office
Office européen des brevets

(11) **EP 4 624 633 A1**

(12) **EUROPEAN PATENT APPLICATION**
published in accordance with Art. 153(4) EPC

(43) Date of publication:
**01.10.2025 Bulletin 2025/40**

(21) Application number: **23894947.3**

(22) Date of filing: **20.11.2023**

(51) International Patent Classification (IPC):
**C25D 1/04** (2006.01)    **C25D 3/38** (2006.01)
**C25D 17/12** (2006.01)    **C23C 28/00** (2006.01)
**C23F 11/18** (2006.01)    **H01M 4/66** (2006.01)
**H01M 10/052** (2010.01)

(52) Cooperative Patent Classification (CPC):
**C23C 28/00; C23F 11/18; C25D 1/04; C25D 3/38;
C25D 17/12; H01M 4/66; H01M 10/052**

(86) International application number:
**PCT/KR2023/018609**

(87) International publication number:
**WO 2024/112019 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022 KR 20220159358
14.12.2022 KR 20220174874
05.10.2023 KR 20230132904
05.10.2023 KR 20230132910**

(71) Applicant: **SK Nexilis Co., Ltd.
Jeollabuk-do 56137 (KR)**

(72) Inventors:
• **JIN, Shan Hua
Jeongeup-si, Jeollabuk-do 56137 (KR)**
• **YOON, Min Seok
Jeongeup-si, Jeollabuk-do 56137 (KR)**

(74) Representative: **Ter Meer Steinmeister & Partner
Patentanwälte mbB
Nymphenburger Straße 4
80335 München (DE)**

(54) **COPPER FOIL CAPABLE OF PREVENTING TEAR OR WRINKLE DEFECTS, ELECTRODE COMPRISING SAME, SECONDARY BATTERY COMPRISING SAME, AND MANUFACTURING METHOD THEREFOR**

(57) One embodiment of the present invention relates to a copper foil comprising a copper film, which contains 99.9 wt% or more of copper, and having an R value of 2.0-3.5. R is calculated by relation 1, [relation 1] R = log (WA / WB) / log (tA / tB). WA in relation 1 is calculated by relation 2, [relation 2] WA = [XA0 + (XA45) X 2 + XA90] / 4. WB in relation 1 is calculated by relation 3, [relation 3] WB = [XB0 + (XB45) X 2 + XB90] / 4. tA in relation 1 means the thickness of a specimen before a tensile test, tB in relation 1 means the thickness of the specimen after a tensile test, XA0, XA45, and XA90 in relation 2 mean respective widths of the central part, in the direction of tension before applying tension, of specimens collected in 0°, 45°, and 90° directions, and XB0, XB45, and XB90 in relation 3 mean respective widths of the central part, in the direction of tension after applying tension, of the specimens collected in 0°, 45°, and 90° directions. One embodiment of the present invention relates to the copper foil comprising a copper film, which contains 99.9 wt% or more of copper, the copper film having a room-temperature loss coefficient of 0.05 or less, wherein the room-temperature loss coefficient is calculated by relation 4. [relation 4] room-temperature loss coefficient= room-temperature loss modulus/room-temperature storage modulus.

FIG. 1

**Description**

**[Technical field]**

The present disclosure relates to a copper foil capable of preventing defects of a tear or wrinkle thereof, an electrode including the same, a secondary battery including the same, and a method for manufacturing the same.

**[Background Art]**

Secondary batteries are types of energy conversion devices that convert electrical energy into chemical energy, store the chemical energy therein, and then convert the chemical energy back to the electrical energy when electricity is needed, thereby generating electricity. The secondary batteries are used as energy sources for electric vehicles as well as portable home appliances such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel-hydrogen secondary batteries, and lithium secondary batteries.

In particular, lithium secondary batteries may store a relatively large amount of energy relative to a size and weight thereof as compared with other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used in each cycle including charging and discharging. When a certain device is operated with a fully charged lithium secondary battery, the lithium secondary battery should have a high charge/discharge capacity in order to increase an operating time of the device. Accordingly, research to satisfy ever-increasing expectations (needs) of consumers for charge/discharge capacity of a lithium secondary battery is continuously required.

Such a secondary battery includes an anode current collector made of a copper foil, and among copper foils, an electrolytic copper foil is widely used as an anode current collector of a secondary battery. Along with an increase in demand for secondary batteries, there is an increase in demand for secondary batteries with high capacity, high efficiency, and high quality, and thus, there is a need for copper foils capable of improving characteristics of secondary batteries. In particular, there is a need for copper foils that can ensure high capacity to secondary batteries and enable secondary batteries to stably maintain capacity and performance.

Meanwhile, as copper foils become smaller in thickness, the amount of active materials that can be included in the same space may be increased, and the number of current collectors may be increased, and thus, the capacity of secondary batteries can be increased. However, as the copper foils become smaller in thickness, curling occurs, and thus, when the copper foil is wound, defects such as tears or wrinkles of the copper foil occur due to curling of an edge, and accordingly, there is difficulty in manufacturing copper foils in the form of a very thin film. Accordingly, in order to manufacture a copper foil having a very thin thickness, the curling of the copper foil should be prevented.

**[Disclosure]**

**[Technical Problem]**

Accordingly, the present disclosure relates to a copper foil capable of preventing the problems caused by the limitations and disadvantages of the related art described above, an electrode including the same, a secondary battery including the same, and a method for manufacturing the same.

According to one embodiment of the present disclosure, there is provided a copper foil that has an R value in a range of 2.0 to 3.5 and thus does not curl, wrinkle, or tear during a manufacturing process.

According to one embodiment of the present disclosure, there is provided a copper foil that is not curled, wrinkled, or teared during a manufacturing process by allowing a copper film to have a room temperature loss factor of 0.05 or less.

According to another embodiment of the present disclosure, there is provided a copper foil that is not curled, wrinkled, or teared during a high-temperature manufacturing process by allowing a copper film to have a high-temperature loss factor of 0.2 or less.

According to another embodiment of the present disclosure, there is provided an electrode for a secondary battery including the copper foil, and a secondary battery including the electrode for a secondary battery.

According to still another embodiment of the present disclosure, there is provided a method for manufacturing a copper foil in which the occurrence of curls, wrinkles, or tears is prevented.

In addition to the aspects of the present disclosure described above, other features and advantages of the present disclosure will be described in the following detailed description, as will be clearly understood by those skilled in the art to which the present disclosure pertains.

[Technical Solution]

According to one embodiment of the present disclosure, there is provided a copper foil including a copper film including 99.9 wt% or more of copper, and having an R value in a range of 2.0 to 3.5. R is calculated by Equation 1 below, [Equation 1] $R = \log(WA / WB) / \log(tA / tB)$ wherein WA in Equation 1 is calculated using Equation 2 below, [Equation 2] $WA = [XA0 + (XA45) \times 2 + XA90] / 4$ WB in Equation 1 is calculated using Equation 3 below, [Equation 3] $WB = [XB0 + (XB45) \times 2 + XB90] / 4$ tA in Equation 1 means a thickness of a specimen before a tensile test, tB in Equation 1 means a thickness of the specimen after the tensile test, XA0, XA45, and XA90 in Equation 2 mean widths of central portions of specimens, which are collected in directions of 0°, 45°, and 90°, respectively, in a stretching direction before stretching, and XB0, XB45, and XB90 in Equation 3 mean widths of the central portions of the specimens, which are collected in directions of 0°, 45°, and 90°, respectively, in the stretching direction after the stretching.

According to one embodiment of the present disclosure, there is provided a copper foil including a copper film including 99.9 wt% or more of copper, wherein the copper film has a room temperature loss factor of 0.05 or less, wherein the room temperature loss factor is calculated by Equation 4 below, [Equation 4] room temperature loss factor=room temperature loss modulus/room temperature storage modulus.

According to another embodiment of the present disclosure, there is provided a method for manufacturing a copper foil, the method including preparing an electrolyte containing copper ions, forming a copper film, and forming a protective layer on the copper film, wherein the forming of the copper film includes forming the copper film on a rotating anode drum by electrically conducting a cathode plate and the rotating anode drum, which are disposed to be spaced apart from each other in the electrolyte in an electrolytic bath, wherein the electrolyte includes copper ions at a concentration of 70 g/L to 100 g/L, sulfuric acid at a concentration of 70 g/L to 150 g/L, chlorine (Cl) at a concentration of 15 ppm to 25 ppm, lead ions ($Pb^{2+}$) at a concentration of 1 ppm to 100 ppm, tungsten (W) at a concentration of 0.3 ppm to 5 ppm, hydrogen peroxide at a concentration of 1 ml/L to 10 ml/L, and an organic additive, wherein the organic additive includes at least one of a polishing agent (component A), a moderator (component B), a leveling agent (component C), wherein the polishing agent (component A) includes sulfonic acid or a metal salt thereof, the moderator (component B) includes a non-ionic water-soluble polymer, and the leveling agent (component C) includes at least one of nitrogen (N) and sulfur (S).

According to still another embodiment of the present disclosure, there is provided an electrode for a secondary battery, the electrode including a copper foil and an active material layer disposed on at least one surface of the copper foil.

According to yet another embodiment of the present disclosure, there is provided a secondary battery including a cathode configured to provide lithium ions during charging, an anode configured to provide electrons and lithium ions during discharge, an electrolyte disposed between the cathode and the anode to provide an environment in which the lithium ions are movable, and a separator configured to electrically insulate the anode and the cathode.

[Advantageous Effects]

According to the present disclosure, by preventing the occurrence of wrinkles or tears in a copper foil during a manufacturing process and using the copper foil to manufacture intermediate parts, such as flexible printed circuit boards (FPCBs) and secondary batteries, and final products, productivity of the intermediate parts as well as the final products can be improved.

[Description of Drawings]

FIG. 1 is a cross-sectional view of a copper foil according to one embodiment of the present disclosure;
FIG. 2 is a cross-sectional view of a copper foil according to another embodiment of the present disclosure;
FIG. 3 is a cross-sectional view of an electrode for a secondary battery according to still another embodiment of the present disclosure;
FIG. 4 is a cross-sectional view of an electrode for a secondary battery according to yet another embodiment of the present disclosure;
FIG. 5 is a schematic cross-sectional view of a secondary battery according to yet another embodiment of the present disclosure; and
FIG. 6 is a device for manufacturing a copper foil according to yet another embodiment of the present disclosure.

**[Best Mode]**

Hereinafter, embodiments of the present disclosure will be described in detail with reference to the accompanying drawings. However, the embodiments described below are presented only for illustrative purposes to help a clear understanding of the present disclosure, and the scope of the present disclosure is not limited.

Shapes, sizes, ratios, angles, numbers, and the like disclosed in the drawings for describing the embodiments of the present disclosure are illustrative, and thus the present disclosure is not limited to the matters illustrated in the drawings. Throughout the present specification, the same components may be referred to by the same reference numerals. In describing the present disclosure, detailed descriptions of well-known technologies will be omitted when it is determined that they may unnecessarily obscure the gist of the present disclosure.

When terms "including," "having," "consisting of," and the like described in the present specification are used, other parts may be added unless a term "only" is used herein. When a component is expressed as the singular form, the plural form is included unless otherwise specified. In addition, in analyzing a component, it is interpreted as including an error range even when there is no explicit description.

In describing a positional relationship, for example, when a positional relationship of two parts is described as being "on," "above," "below, "next to," or the like, unless "immediately" or "directly" is not used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal predecessor relationship is described as being "after," "subsequent," "next to," "prior to," or the like, unless "immediately" or "directly" is not used, cases that are not continuous may also be included.

In order to describe various components, terms such as "first," "second," and the like are used, but these components are not limited by these terms. These terms are only used to distinguish one component from another component. Therefore, a first component described below may be a second component within the technical spirit of the present disclosure.

The term "at least one" should be understood to include all possible combinations from one or more related items. For example, the meaning of "at least one of first, second, and third items" may mean all combinations of two or more items of the first, second, and third items as well as each of the first, second, and third item.

The features of various embodiments of the present disclosure may be partially or wholly coupled to or combined with each other, and may be various technically linked or operated, and each of the embodiments may be implemented independently of each other or may be implemented together in a related relationship.

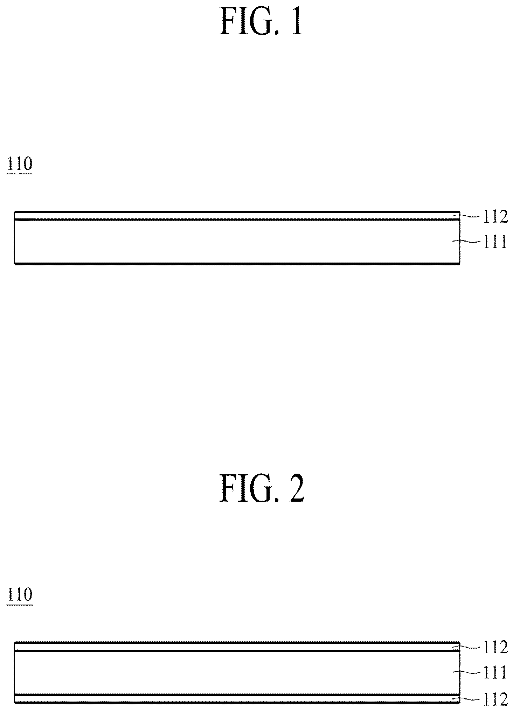

FIG. 1 is a cross-sectional view of a copper foil 110 according to one embodiment of the present disclosure.

Referring to FIG. 1, the copper foil 110 of the present disclosure includes a copper film 111 including 99.9 wt% or more of copper and a protective layer 112 formed on the copper film 111. In the copper foil 110 illustrated in FIG. 1, the protective layer 112 is formed on one surface of the copper film 111, but the embodiments of the present disclosure are not limited thereto. Referring to FIG. 2, the protective layer 112 may be formed on each of both surfaces of the copper film 111.

The copper film 111 may be formed on a rotating anode drum through electroplating, and has a shiny surface that is in direct contact with the rotating anode drum in an electroplating process and a matte side opposite to the shiny surface.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance thereof, thereby increasing a lifespan of a final product including the copper foil 110 as well as a lifespan of the copper foil 110 itself.

According to one embodiment of the present disclosure, the copper foil 110 has an R value in a range of 2.0 to 3.5. The R value may be obtained by measuring and calculating each of WA, WB, tA, and tB, and calculating the measured and calculated values of WA, WB, tA, and tB according to Equation 1 below.

$$[\text{Equation 1}]$$

$$R = \log (WA / WB) / \log(tA / tB)$$

Here, tA in Equation 1 means a thickness of a specimen before a tensile test, and tB in Equation 1 means a thickness of the specimen after the tensile test.

WA and WB may be obtained by the calculation according to Equations 2 and 3 below. First, the copper foil 110 is collected in each of three directions of 0°, 45°, and 90° with respect to a mechanical direction (MD direction), and a uniaxial tensile test is performed for each of the collected copper foils under the condition of a universal testing machine (UTM) tensile test speed of 5 mm/min. At this time, the tensile test is performed using an UTM until the collected copper foil has elongated by 15% after stretching compared to the copper foil before the stretching. In addition, XA0, XA45, XA90, XB0, XB45, and XB90 of the following Equations 2 and 3 may be calculated and computed by measuring a width of a central portion of each of the copper foils before the tensile test and after the tensile test,

$$[\text{Equation 2}]$$

$$WA = [XA0 + (XA45) \times 2 + XA90] / 4$$

$$[\text{Equation 3}]$$

$$WB = [XB0 + (XB45) \times 2 + XB90] / 4$$

where, XA0, XA45, and XA90 in Equation 2 mean widths of the central portions of the specimens, which are collected in directions of 0°, 45°, and 90°, respectively, in a stretching direction before the stretching.

XB0, XB45, and XB90 in Equation 3 mean widths of the central portions of the experimental specimens, which are collected in directions of 0°, 45°, and 90°, respectively, in a stretching direction after the stretching.

According to one embodiment of the present disclosure, the copper foil 110 may have the R value in the range of 2.0 to 3.5.

When the R value of the copper foil 110 is less than 2.0, the change in thickness of the copper foil 110 is larger than the change in width of the copper foil 110, and thus wrinkles or tears may occur during the manufacturing process of the copper foil 110, and accordingly, workability may be reduced and a failure rate of the secondary battery may be increased.

On the other hand, when the R value of the copper foil 110 is greater than 3.5, the change in width of the copper foil 110 is larger than the change in thickness of the copper foil 110, and thus wrinkles or tears may occur during the manufacturing process of the copper foil 110, and accordingly, workability may be reduced and the failure rate of the secondary battery may be increased.

According to one embodiment of the present disclosure, the copper film 111 has a room temperature loss factor of 0.05 or less. The room temperature loss factor may be obtained through a calculation according to Equation 4 below.

Room temperature loss factor = room temperature loss modulus/room temperature storage modulus        [Equation 4]

The room temperature storage modulus in Equation 4 refers to elastic energy stored in the copper film at room temperature, and the room temperature loss modulus in Equation 4 refers to elastic energy stored in the copper film, which is lost due to viscosity. Specifically, the room temperature refers to 25 °C.

When the room temperature loss factor of the copper film 111 is greater than 0.05, the loss of the elastic energy stored in the copper film 111 is increased, so that the elastic energy stored in the copper film may not be sustained against an external impact. Accordingly, wrinkles or tears may occur during the manufacturing process of the copper foil 110, thereby reducing workability and increasing a defect rate of the secondary battery.

According to one embodiment of the present disclosure, the copper film 111 has a high-temperature loss factor of 0.2 or less. The high-temperature loss factor may be obtained through a calculation according to Equation 5 below.

High-temperature loss factor = high-temperature loss modulus/high-temperature storage modulus        [Equation 5]

The high-temperature storage modulus in Equation 5 refers to elastic energy stored in the copper film after heat-treating at 350 °C for one hour, and the high-temperature loss modulus in Equation 5 refers to elastic energy stored in the copper film, which is lost due to viscosity after heat-treating at 350 °C for one hour.

When the high-temperature loss factor of the copper film 111 is greater than 0.2, the loss of the elastic energy stored in the copper film 111 at high temperatures is increased, so that the elastic energy stored in the copper film may not be sustained against an external impact. In addition, due to the nature of the manufacturing process of the copper foil 110, which is conducted at high temperatures, softening may occur during the roll pressing process and/or the drying process, and deterioration of handleability due to wrinkles may occur.

According to one embodiment of the present disclosure, the copper film 111 may have a room temperature storage modulus in a range of 30 GPa to 80 GPa. The room temperature storage modulus refers to elastic energy stored in the copper film at room temperature.

When the room temperature storage modulus of the copper film 111 is less than 30 GPa, the elastic energy stored in the copper film 111 becomes so small that there is not enough elastic energy to withstand an external impact. Accordingly, wrinkles or tears may occur during the manufacturing process of the copper foil 110, thereby reducing workability and increasing a defect rate of the secondary battery.

When the room temperature storage modulus of the copper film 111 exceeds 80 GPa, it may not be able to respond to the expansion and contraction of an active material during the manufacturing process of an anode current collector of a secondary battery. As a result, the active material and copper foil 110 may be delaminated or the copper foil 110 may be broken, resulting in lower charge and discharge efficiency of the secondary battery.

According to one embodiment of the present disclosure, the copper film 111 has a room temperature loss modulus of 5 GPa or less. The room temperature loss modulus refers to elastic energy stored in the copper film, which is lost due to viscosity at room temperature.

When the room temperature loss modulus of the copper film 111 is greater than 5 GPa, the loss of the elastic energy stored in the copper film 111 is increased, so that the elastic energy stored in the copper film may not be sustained against an external impact. Accordingly, wrinkles or tears may occur during the manufacturing process of the copper foil 110, thereby reducing workability and increasing a defect rate of the secondary battery.

According to one embodiment of the present disclosure, the copper film 111 has a high-temperature storage modulus in a range of 20 GPa to 60 GPa. The high-temperature storage modulus refers to elastic energy stored in the copper film after heat-treating at 350 °C for one hour.

When the high-temperature storage modulus of the copper film 111 is less than 20 GPa, the elastic energy stored in the copper film 111 under high-temperature conditions is very small. Accordingly, in the nature of the manufacturing process of the copper foil 110, which is conducted at high temperatures, the copper foil 110 does not have sufficient elastic energy to withstand an external impact at high temperatures. Accordingly, wrinkles or tears may occur during the manufacturing process of the copper foil 110, thereby reducing workability and increasing a defect rate of the secondary battery.

In a case in which the high-temperature storage modulus of the copper film 111 is greater than 60 GPa, when the active material expands under high-temperature conditions, due to the nature of the manufacturing process of the copper foil 110, which is conducted at high temperatures, the active material and the copper foil 110 may bd delaminated or the copper foil 110 may be broken to lower the charge and discharge efficiency of the secondary battery.

According to one embodiment of the present disclosure, the copper film 111 has a high-temperature loss modulus of 10 GPa or less. The high-temperature loss modulus refers to elastic energy stored in the copper film, which is lost due to viscosity after heat treatment at 350 °C for one hour.

When the high-temperature loss modulus of the copper film 111 is greater than 10 GPa, the loss of the elastic energy stored in the copper film 111 at high temperatures is increased. Accordingly, due to the nature of the manufacturing process of the copper foil 110, which is conducted at high temperatures, in the copper foil 110 under high-temperature conditions, the elastic energy stored in the copper film may not be sustained against an external impact. In addition, due to the nature of the manufacturing process of the copper foil 110, which is conducted at high temperatures, softening may occur during the roll pressing process and/or the drying process, and deterioration of handleability due to wrinkles may occur.

According to one embodiment of the present disclosure, the copper foil 110 may have a coefficient of thermal expansion in a range of 5 ppm/°C to 30 ppm/°C. Specifically, the copper foil 110 may have a coefficient of thermal expansion in a range of 10 ppm/°C to 25 ppm/°C. More specifically, the copper foil 110 may have a coefficient of thermal expansion in a range of 15 ppm/°C to 20 ppm/°C.

When the coefficient of thermal expansion of the copper foil 110 is less than 5 ppm/°C, wrinkling or tearing of the copper foil 110 may occur in a process of manufacturing the copper foil 110 through a roll-to-roll process.

On the other hand, when the coefficient of thermal expansion is greater than 30 ppm/°C, the copper foil 110 may be bent to a substantial degree in the process of manufacturing the copper foil 110 through the roll-to-roll process.

The copper foil 110 according to one embodiment of the present disclosure may have a thickness of 4 $\mu$m to 35 $\mu$m. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 $\mu$m causes a degradation in workability.

On the other hand, when the secondary battery is manufactured with the copper foil 110 with a thickness exceeding 35 $\mu$m, it becomes difficult to achieve high capacity due to the thick copper foil 110.

The copper foil 110 according to one embodiment of the present disclosure may have a tensile strength of 45 kg/mm$^2$ or more. In order to suppress wrinkling and tearing of the copper foil 110, the copper foil 110 of the present disclosure has a high tensile strength of 45 kg/mm² or more. When the tensile strength of the copper foil 110 is less than 45 kg/mm², during a roll-to-roll manufacturing process, folding of the copper foil 110 is caused between two adjacent rolls, or wrinkling of lateral end portions of the copper foil 110 is caused.

The copper foil 110 according to one embodiment of the present disclosure may have an elongation of 3% to 13%.

In a case in which the elongation of the copper foil 110 is less than 3%, when the copper foil 110 is used as a current collector of a secondary battery, there is a high risk that the copper foil 110 will be torn because it cannot be stretched sufficiently in response to a large expansion in volume of a high-capacity active material.

On the other hand, when the elongation of the copper foil 110 is greater than 13%, the copper foil 110 is easily stretched in a process of manufacturing an electrode for a secondary battery, thereby causing deformation in the electrode.

According to one embodiment of the present disclosure, the copper foil 110 may have a ten-point average roughness (Rz) of 0.7 $\mu$m to 0.9 $\mu$m.

As the secondary battery is repeatedly charged and discharged, an active material layer may alternately contract and expand, which leads to the separation of the active material layer from the copper foil 110, thus reducing the charge and discharge efficiency of the secondary battery. Accordingly, in order to secure a certain level or higher of capacity retention rate and lifespan of the secondary battery (that is, in order to suppress the deterioration of charge and discharge efficiency of the secondary battery), the bonding strength of the copper foil 110 and the active material layer should be high by allowing the copper foil 110 to have an excellent coatability on the active material.

Specifically, as the ten-point average roughness (Rz) of the copper foil 110 is smaller, the charge and discharge efficiency of the secondary battery including the copper foil 110 tends to be less deteriorated. Thus, according to one embodiment of the present disclosure, the copper foil 110 has the ten-point average roughness (Rz) of 0.7 to $\mu$m 0.9 $\mu$m.

When the ten-point average roughness (Rz) of the copper foil 110 is less than 0.7 $\mu$m, the surface area of the copper foil 110 is relatively small so that the active material is easily delaminated from the copper foil 110, and as a result, rapid lifespan deterioration of the secondary battery due to a repetition of charging and discharging is caused.

On the other hand, when the ten-point average roughness (Rz) of the copper foil 110 is greater than 0.9 $\mu$m, a plurality of spaces exist between the copper foil 110 and the active material layer since contact uniformity between the copper foil 110 and the active material layer does not reach a predetermined level (i.e., the coating itself is partially performed), and as a result, rapid lifespan deterioration of the secondary battery due to a repetition of charging and discharging is caused.

According to one embodiment of the present disclosure, the copper foil 110 may have an arithmetic mean roughness (Ra) of 0.2 $\mu$m to 0.3 $\mu$m.

As the secondary battery is repeatedly charged and discharged, an active material layer may alternately contract and expand, which leads to the separation of the active material layer from the copper foil 110, thus reducing the charge and discharge efficiency of the secondary battery. Accordingly, in order to secure a certain level or higher of capacity retention rate and lifespan of the secondary battery (that is, in order to suppress the deterioration of charge and discharge efficiency of the secondary battery), the bonding strength of the copper foil 110 and the active material layer should be high by allowing the copper foil 110 to have an excellent coatability on the active material.

Specifically, as the arithmetic mean roughness (Ra) of the copper foil 110 is smaller, the charge and discharge efficiency of the secondary battery including the copper foil 110 tends to be less poor. Thus, according to one embodiment of the present disclosure, the copper foil 110 has the arithmetic mean roughness (Ra) of 0.2 $\mu$m to 0.3 $\mu$m.

When the arithmetic mean roughness (Ra) of the copper foil 110 is less than 0.2 $\mu$m, the surface area of the copper foil 110 is relatively small so that the active material is easily delaminated from the copper foil 110, and as a result, rapid lifespan deterioration of the secondary battery due to a repetition of charging and discharging is caused.

On the other hand, when the arithmetic mean roughness (Ra) of the copper foil 110 is greater than 0.3 $\mu$m, a plurality of spaces exist between the copper foil 110 and the active material layer since contact uniformity between the copper foil 110 and the active material layer does not reach a predetermined level (i.e., the coating itself is partially performed), and as a result, rapid lifespan deterioration of the secondary battery due to a repetition of charging and discharging is caused.

Hereinafter, an electrode 100 including the copper foil 110 of the present disclosure and a secondary battery including the electrode 100 will be described in detail.

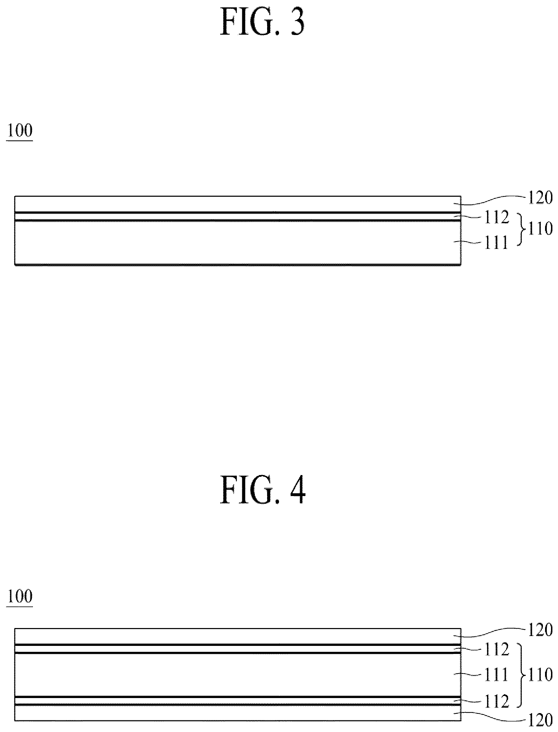

FIG. 3 is a cross-sectional view of an electrode for a secondary battery according to one embodiment of the present disclosure.

As illustrated in FIG. 3, the electrode 100 for a secondary battery according to one embodiment of the present disclosure includes the copper foil 110 of one of the above-described embodiments of the present disclosure and an active material layer 120.

FIG. 3 illustrates a configuration in which the active material layer 120 is formed on one surface of the copper foil 110. However, the present disclosure is not limited thereto, and referring to FIG. 4, the active material layer 120 may be formed on each of both surfaces of the copper foil 110.

Generally, in a lithium secondary battery, an aluminum foil is used as a cathode current collector coupled to a cathode active material, and the copper foil 110 is used as an anode current collector coupled to an anode active material.

According to one embodiment of the present disclosure, the electrode 100 for a secondary battery is an anode, the copper foil 110 is used as an anode current collector, and the active material layer 120 includes an anode active material.

In order to secure a high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

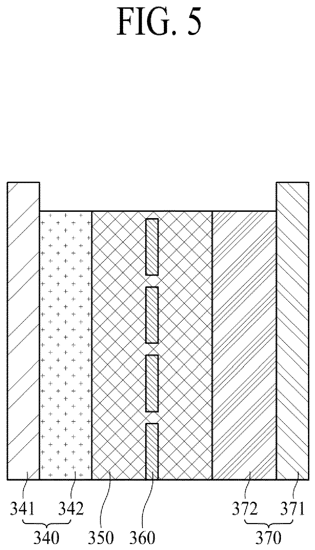

FIG. 5 is a schematic cross-sectional view of a secondary battery according to one embodiment of the present disclosure.

Referring to FIG. 5, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated in one electrode from being uselessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 or 2 may be used as the anode current collector 341. In addition, the electrode 100 for a secondary battery illustrated in FIG. 3 or 4 may be used as the anode 340 of the secondary battery illustrated in FIG. 5.

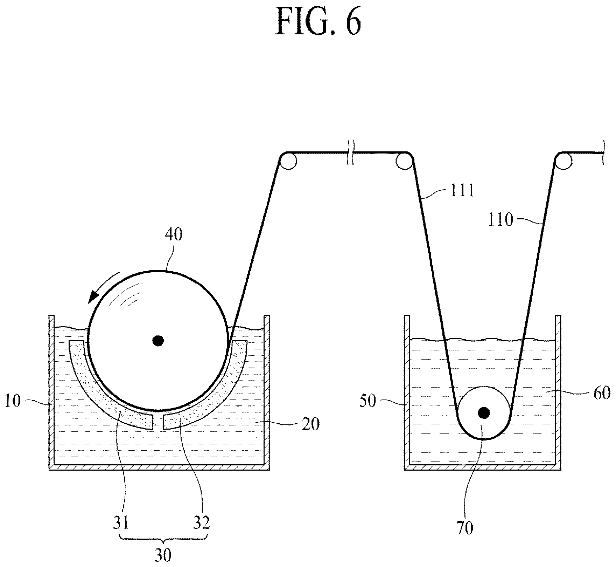

Hereinafter, a method for manufacturing the copper foil 110 of the present disclosure will be described in detail with reference to FIG. 6.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic bath 10.

As illustrated in FIG. 6, the cathode plate 30 may include first and second cathode plates 31 and 32 electrically insulated from each other.

The forming of the copper film 111 may be performed by forming a seed layer through electrical conduction between the first cathode plate 31 and the rotating anode drum 40, and then growing a seed layer through electrical conduction between the second cathode plate 32 and the rotating anode drum 40.

A current density provided by each of the first and second cathode plates 31 and 32 may be 30 to 130 ASD (A/dm$^2$).

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 is greater than 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 48 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, the electrolyte 20 includes copper ions at a concentration of 70 g/L to 100 g/L, sulfuric acid at a concentration of 70 g/L to 150 g/L, chlorine (Cl) at a concentration of 15 ppm to 25 ppm, hydrogen peroxide (H$_2$O$_2$) at a concentration of 1 ml/L to 10 ml/L, and an organic additive.

In order to facilitate the formation of the copper film 111 through copper electrodeposition, the concentration of the copper ions and the concentration of the sulfuric acid in the electrolyte 20 are adjusted in a range of 70 g/L to 100 g/L and a range of 70 g/L to 150 g/L, respectively.

In one embodiment of the present disclosure, the chlorine (Cl) includes all of chlorine ions (Cl-) and chlorine atoms present in a molecule. The chlorine (Cl) may, for example, be used to remove silver (Ag) ions introduced into the electrolyte 20 in a process of forming the copper film 111. Specifically, the chlorine (Cl) may precipitate silver (Ag) ions in the form of silver chloride (AgCl). The silver chloride (AgCl) may be removed through filtration.

When the concentration of the chlorine (Cl) is less than 15 ppm, the silver (Ag) ions are not removed well. On the other hand, when the concentration of the chlorine (Cl) exceeds 25 ppm, unnecessary reaction may occur due to the excessive amount of the chlorine (Cl). Accordingly, the concentration of the chlorine (Cl) in the electrolyte 20 is controlled in a range of 15 ppm to 25 ppm.

According to one embodiment of the present disclosure, the electrolyte 20 including an organic additive may further include lead ions ($Pb^{2+}$). Specifically, the electrolyte 20 may include lead ions ($Pb^{2+}$) at a concentration of 1 ppm to 100 ppm. When the lead ions ($Pb^{2+}$) are maintained at the concentration of 1 ppm to 100 ppm, the R value according to the present disclosure may be maintained in the range of 2.0 to 3.5.

When the lead ions ($Pb2+$) are maintained at the concentration of 1 ppm to 100 ppm, in the copper film 111 according to the present disclosure, the room temperature loss factor may be maintained to be 0.05 or less, and the high-temperature loss factor may be maintained to be 0.2 or less.

On the other hand, when the concentration of the lead ions ($Pb^{2+}$) is less than 1 ppm, which may reduce effectiveness in terms of maintaining the physical properties of the present disclosure. As a result, a problem in which the R value deviates from the range of 2.0 to 3.5 may occur.

Further, when the concentration of the lead ions ($Pb^{2+}$) is greater than 100 ppm, copper may be non-uniformly precipitated, which may cause rapid changes in the thickness and width of the copper foil before and after the tensile test, and thus a problem in which the R value deviates from the range of 2.0 to 3.5 may occur.

On the other hand, when the concentration of lead ions ($Pb2+$) is less than 1 ppm, a problem may occur where effectiveness is reduced in terms of maintaining of maintaining the physical properties of the present disclosure. As a result, rapid changes in values of the loss modulus and the storage modulus of the copper film 111 may occur, and thus the value of the room temperature loss factor exceeds 0.05, and the value of the high-temperature loss factor exceeds 0.2.

In addition, when the concentration of lead ions ($Pb2+$) is greater than 100 ppm, copper may be non-uniformly precipitated, which may cause rapid changes in the values of the loss modulus and the storage modulus of the copper film 111, and thus the value of the room temperature loss factor exceeds 0.05 and the high-temperature loss factor exceeds 0.2.

In addition, according to one embodiment of the present disclosure, the electrolyte 20 including an organic additive may further include tungsten (W). Specifically, the electrolyte 20 may include tungsten (W) at a concentration of 0.3 ppm to 5 ppm. When the tungsten (W) is maintained at a concentration of 0.3 ppm to 5 ppm, the R value according to the present disclosure may be maintained in the range of 2.0 to 3.5.

According to one embodiment of the present disclosure, the electrolyte 20 including an organic additive may further include tungsten (W). When the electrolyte 20 is treated with tungsten (W), the average size of the crystalline particles included in the copper film 111 may be reduced, and the strength of the copper foil 110 may be increased. The concentration of tungsten (W) in the electrolyte 20 may be in a range of 0.3 ppm to 5 ppm. Specifically, it is preferable that the tungsten (W) is added at a concentration of 1 ppm to 4 ppm.

On the other hand, when the concentration of the tungsten (W) is less than 0.3 ppm, an average particle size of crystalline particles in the copper film 111 is not constant, which may cause rapid changes in the thickness and width of the copper foil before and after the tensile test, and thus a problem in which the R value deviates from the range of 2.0 to 3.5 may occur.

Further, when the concentration of the tungsten (W) is greater than 5 ppm, impurities may be increased, which may cause rapid changes in the thickness and width of the copper foil before and after the tensile test, and thus a problem in which the R value deviates from the range of 2.0 to 3.5 may occur.

On the other hand, when the concentration of tungsten (W) is less than 0.3 ppm, an average crystalline particle size of the copper film 111 is not constant, which may cause rapid changes in the values of the loss modulus and the storage modulus of the copper film 111, and thus the value of the room temperature loss factor exceeds 0.05 and the value of the high-temperature loss factor exceeds 0.2.

In addition, when the concentration of tungsten (W) is greater than 5 ppm, impurities are increased, which may cause rapid changes in the values of the loss modulus and storage modulus of the copper film 111, and thus the value of the room temperature loss factor exceeds 0.05 and the high-temperature loss factor exceeds 0.2.

According to one embodiment of the present disclosure, the electrolyte 20 including an organic additive may further include hydrogen peroxide ($H_2O_2$). Due to the organic additive, organic impurities may be present in the electrolyte 20 that is continuously plated, and a content of carbon (C) in the copper foil may be appropriately adjusted by decomposing the organic impurities by treating the organic impurities with the hydrogen peroxide ($H_2O_2$). As a concentration of total organic carbon (TOC) in the electrolyte 20 is increased, an amount of carbon (C) elements introduced into the copper film 111 is increased, which causes an increase in total amount of elements detached from the copper film 111 during heat treatment and thus causes a decrease in strength of the copper foil 110 after heat treatment.

The hydrogen peroxide ($H_2O_2$) is added in an amount of 1 ml to 10 ml with respect to one L of the electrolyte.

Specifically, the hydrogen peroxide ($H_2O_2$) may be added in an amount of 2 ml to 8 ml with respect to one L of the electrolyte. When the amount of the added hydrogen peroxide ($H_2O_2$) is less than 1 ml/L, it is meaningless because there is little effect on the decomposition of organic impurities. When the amount of the added hydrogen peroxide ($H_2O_2$) exceeds 10 ml/L, the organic impurities are excessively decomposed, and thus, the effects of organic additives such as a polishing agent, a moderator, and a leveling agent, are also suppressed.

The organic additive included in the electrolyte 20 includes at least one of a polishing agent (component A), a moderator (component B), a leveling agent (component C). The organic additive in the electrolyte 20 has a concentration of 1 ppm to 100 ppm.

The organic additive may include two or more of the polishing agent (component A), the moderator (component B), and the leveling agent (component C), and may include all of the three components. In this case, the concentration of the organic additive is 100 ppm or less. When the organic additive includes all of the polishing agent (component A), the moderator (component B), and the leveling agent (component C), the organic additive may have a concentration of 10 ppm to 100 ppm.

The polishing agent (component A) includes sulfonic acid or a metal salt thereof. The polishing agent (component A) may have a concentration of 1 ppm to 25 ppm in the electrolyte 20.

The polishing agent (component A) may increase an amount of electric charges of the electrolyte 20 to improve an electrodeposition speed of copper, may improve the curling characteristics of the copper foil, and may increase the gloss of the copper foil 110. When the concentration of the polishing agent (component A) is less than 1 ppm, the gloss of the copper foil 110 is lowered while simultaneously causing a surface defect of the copper foil 110, and thus a problem in which the R value deviates from the range of 2.0 to 3.5 may occur. In addition, when the concentration of the polishing agent (component A) exceeds 25 ppm, roughness of the copper foil 110 may be increased, and strength thereof may be lowered, which may cause rapid changes in the thickness and width of the copper foil before and after the tensile test, and thus a problem in which the R value deviates from the range of 2.0 to 3.5 may occur.

The polishing agent (component A) may increase an amount of electric charges of the electrolyte 20 to improve an electrodeposition speed of copper, may improve the curling characteristics of the copper foil, and may increase the gloss of the copper foil 110. When the concentration of polishing agent (component A) is less than 1 ppm, the gloss of the copper foil 110 is lowered, and when the concentration of polishing agent (component A) exceeds 25 ppm, the roughness of the copper foil 110 may be increased and the strength of the copper foil 110 may be lowered. As a result, wrinkles or tears may occur during the manufacturing process of the copper foil 110. In addition, rapid changes in values of the loss modulus and the storage modulus may occur, and thus the value of the room temperature loss factor exceeds 0.05, and the value of the high-temperature loss factor exceeds 0.2.

More specifically, the polishing agent (component A) may have a concentration of 5 ppm to 20 ppm in the electrolyte 20.

The polishing agent may include, for example, at least one selected from among a bis-(3-sulfopropyl)-disulfide disodium salt, a 3-mercapto-1-propanesulfonic acid, a 3-(N,N-dimethylthiocarbamoyl)-thiopropanesulfonate sodium salt, a 3-[(amino-iminomethyl)thio]-1-propanesulfonate sodium salt, an O-ethyldithiocarbonato-S-(3-sulfopropyl)-ester sodium salt, a 3-(benzothiazolyl-2-mercapto)-propyl-sulfonic acid sodium salt, and an ethylenedithiodipropylsulfonic acid sodium salt.

The moderator (component B) includes a non-ionic water-soluble polymer. The moderator (component B) may have a concentration of 1 ppm to 10 ppm in the electrolyte 20.

The moderator (component B) reduces the electrodeposition speed of copper to prevent a rapid increase in roughness and a decrease in strength of the copper foil 110. This moderator (component B) is referred to as an inhibitor or suppressor.

When the concentration of the moderator (component B) is less than 1 ppm, the roughness of the copper foil 110 may be rapidly increased, and the strength of the copper foil 110 may be lowered, which may cause rapid changes in the thickness and width of the copper foil before and after the tensile test, and thus a problem in which the R value deviates from the range of 2.0 to 3.5 may occur. On the other hand, although the concentration of the moderator (component B) exceeds 10 ppm, there is almost no change in physical properties such as the appearance, gloss, roughness, strength, and elongation of the copper foil 110. Accordingly, without increasing manufacturing costs and wasting raw materials due to an unnecessary increase in concentration of the moderator (component B), the concentration of the moderator (component B) may be adjusted in a range of 1 ppm to 10 ppm.

When the concentration of moderator (component B) is less than 1 ppm, the roughness of the copper foil 110 rapidly rises, and the strength of the copper foil 110 may be reduced. In addition, rapid changes in values of the loss modulus and the storage modulus may occur, and thus the value of the room temperature loss factor exceeds 0.05, and the value of the high-temperature loss factor exceeds 0.2. As a result, wrinkles or tears may occur during the manufacturing process of the copper foil 110. On the other hand, although the concentration of moderator (component B) exceeds 10 ppm, there is almost no change in physical properties such as the appearance, gloss, roughness, strength, and elongation of the copper foil 110. Accordingly, without increasing manufacturing costs and wasting raw materials due to an unnecessary increase in concentration of moderator (component B), the concentration of moderator (component B) may be adjusted in a range of 1 ppm to 10 ppm.

The moderator (component B) may include, for example, at least one non-ionic water-soluble polymer selected from among a polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of the moderator is not limited thereto, and other non-ionic water-soluble polymers usable to manufacture the high strength copper foil 110 may be used as the moderator.

The leveling agent (component C) includes at least one of nitrogen (N) and sulfur (S). That is, the leveling agent (component C) may include one or more nitrogen atoms (N) or one or more sulfur atoms (S) in one molecule and may include one or more nitrogen atoms (N) and one or more sulfur atoms (S). For example, the leveling agent (component C) is an organic compound including at least one of nitrogen (N) and sulfur (S).

The leveling agent (component C) prevents excessively high peaks or excessively large protrusions from being generated in the copper film 111 to enable the copper film 111 to be macroscopically planarized. The leveling agent (component C) may have a concentration of 1 ppm to 10 ppm in the electrolyte 20.

When the concentration of the leveling agent (component C) is less than 1 ppm, the strength of the copper foil 110 is reduced, and thus it is difficult to manufacture the high strength copper foil 110, which may cause rapid changes in the thickness and width of the copper foil before and after the tensile test, and thus a problem in which the R value deviates from the range of 2.0 to 3.5 may occur. On the other hand, when the concentration of the leveling agent (component C) exceeds 10 ppm, the surface roughness of the copper foil 110 may be excessively increased to decrease strength, and pinholes or curling may occur on a surface of the copper foil 110, which makes it difficult to separate the copper foil 110 from a winder WR after being manufactured. As a result, rapid changes in the thickness and width of the copper foil before and after the tensile test may occur, and thus a problem in which the R value deviates from the range of 2.0 to 3.5 may occur.

When the concentration of leveling agent (component C) is less than 1 ppm, the strength of the copper foil 110 is reduced, and thus the copper foil 110 may be wrinkled or teared, and in addition, rapid changes in values of the loss modulus and the storage modulus may occur, and thus the value of the room temperature loss factor exceeds 0.05, and the value of the high-temperature loss factor exceeds 0.2. On the other hand, when the concentration of leveling agent (component C) exceeds 10 ppm, the surface roughness of the copper foil 110 may be excessively increased to decrease strength, and pinholes or curling may occur on a surface of the copper foil 110, which makes it difficult to separate the copper foil 110 from a winder WR after being manufactured. In addition, rapid changes in values of the loss modulus and the storage modulus may occur, and thus the value of the room temperature loss factor exceeds 0.05, and the value of the high-temperature loss factor exceeds 0.2.

The leveling agent (component C) may include, for example, at least one selected from among diethylthiourea, ethylenethiourea, acetylenethiourea, dipropylthiourea, dibutylthiourea, N-trifluoroacetylthiourea, N-ethylthiourea, N-cyanoacetylthiourea, N-allylthiourea, o-tolylthiourea, N,N'-butylenethiourea, thiazolidinethiol, 4-thiazolinethiol, 4-methyl-2-pyrimidinethiol, 2-thiouracil, a 3-(benzotriazole-2-mercapto)-pyrosulfuric acid, 2-mercaptopyridine, 3-(5-mercapto-1H-tetrazole)benzenesulfonate, 2-mercaptobenzothiazole, dimethylpyridine, 2,2'-bipyridine, 4,4'-bipyridine, pyrimidine, pyridazine, pyrinoline, oxazole, thiazole, 1-methylimidazole, 1-benzylimidazole, 1-methyl-2-methylimidazole, 1-benzyl-2-methylimidazole, 1-ethyl-4-methylimidazole, 1-ethyl-2-ethyl-4-methylol, N-methylpyrrole, N-ethylpyrrole, N-butylpyrrole, N-methylpyrroline, N-ethylpyrroline, N-butylpyrroline, purine, quinoline, isoquinoline, N-methylcarbazole, N-ethylcarbazole, and N-butylcarbazole.

When the copper film 111 is formed, a flow rate of the electrolyte 20 supplied into the electrolytic bath 10 may be 41 m$^3$/hour to 45 m$^3$/hour.

The forming of the copper film 111 may include at least one of filtering the electrolyte 20 using activated carbon, filtering the electrolyte 20 using diatomaceous earth, and treating the electrolyte 20 with ozone (O$_3$).

Specifically, in order to filter the electrolyte 20, the electrolyte 20 may be circulated at a flow rate of 35 m$^3$/hour to 45 m$^3$/hour. That is, in order to remove solid impurities present in the electrolyte 20 while electroplating to form the copper film 111, filtering may be performed at a flow rate of 35 m$^3$/hour to 45 m$^3$/hour. In this case, activated carbon or diatomaceous earth may be used.

In order to maintain cleanliness of the electrolyte 20, the electrolyte 20 may be treated with ozone (O3).

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20.

The water-cleaned Cu wire may be input into sulfuric acid for an electrolyte to prepare the electrolyte 20.

According to one embodiment of the present disclosure, in order to satisfy the characteristics of the copper foil 110, a concentration of TOC in the electrolyte 20 is controlled to be 50 ppm or less. That is, the electrolyte 20 may have a TOC concentration of 50 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 6, the method may further include immersing the copper film 111 in an anticorrosion solution 60. When the copper film 111 is immersed in the anticorrosion solution 60, the copper film 111 may be guided by a guide roll 70 disposed in the anticorrosion solution 60.

As described above, the anticorrosion solution 60 may include at least one of a chromium compound, a silane compound, and a nitrogen compound. For example, the copper film 111 may be immersed in a potassium dichromate solution of 1g/L to 10 g/L at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one active material selected from the group consisting of a carbon, a metal (Me) of Si, Ge, Sn, Li, Zn, Mg, Cd, Ce, Ni or Fe, an alloy including the metal (Me), an oxide (MeOx) of the metal (Me), and a complex of the metal (Me) and carbon is coated on one surface or both surfaces the copper foil 110 of the present disclosure prepared through the method as described above to prepare an electrode (i.e., anode) for a secondary battery of the present disclosure.

For example, 100 parts by weight of carbon for an anode active material, 1 to 3 parts by weight of styrene butadiene rubber (SBR), and 1 to 3 parts by weight of carboxymethyl cellulose (CMC) are mixed and produced into a slurry using a distilled water as a solvent. Subsequently, the slurry is applied on the copper foil 110 using a doctor blade to a thickness of 20 $\mu$m to 60 $\mu$m and pressed at a pressure of 0.5 to 1.5 ton/cm$^2$ at 110 °C to 130 °C.

A secondary battery may be manufactured using the electrode (anode) for a secondary battery of the present disclosure prepared through the method as described above, together with the conventional cathode, electrolyte, and separator.

Hereinafter, the present disclosure will be described in detail with reference to examples and comparative examples. However, the examples described below are only for the understanding of the present disclosure, and the scope of the present disclosure is not limited to these manufacturing examples.

Examples 1 to 4 and Comparative Examples 1 to 7

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD.

In addition, concentrations of chlorine (Cl), lead (Pb$^{2+}$), and tungsten (W), which are contained in the electrolyte 20, and a concentration of an organic additive were as shown in Table 1 below.

In the organic additive, a bis-(3-sulfopropyl)-disulfide disodium salt (SPS) was used as a polishing agent (component A), PEG was used as a moderator (component B), and ethylene thiourea (ETU) was used as a leveling agent (component C).

A current at a current density of 60 ASD was applied between the rotating anode drum 40 and the cathode plate 30 to prepare a copper film 111. Thereafter, the copper film 111 was immersed in an anticorrosion solution for about two seconds to treat a surface of the copper film 111 with chromium to form a protective layer 112, thereby preparing a copper foil 110. An anticorrosion solution containing chromic acid as a main component was used as the anticorrosion solution, and a concentration of the chromic acid was 5 g/L.

As a result, copper foils of Examples 1 to 4 and Comparative Examples 1 to 7 were prepared.

[Table 1]

| | SPS (Component A) (ppm) | PEG (Component B) (ppm) | ETU (Component C) (ppm) | Chlorine (ppm) | Lead (Pb$^{2+}$) (ppm) | Tungsten (ppm) | Hydrogen peroxide (ml/L) | Current density (ASD) |
|---|---|---|---|---|---|---|---|---|
| Example 1 | 5 | 2 | 3 | 20 | 30 | 1.0 | 2 | 50 |

(continued)

|  | SPS (Component A) (ppm) | PEG (Component B) (ppm) | ETU (Component C) (ppm) | Chlorine (ppm) | Lead (Pb$^{2+}$) (ppm) | Tungsten (ppm) | Hydrogen peroxide (ml/L) | Current density (ASD) |
|---|---|---|---|---|---|---|---|---|
| Example 2 | 10 | 4 | 5 | 20 | 30 | 1.5 | 5 | 50 |
| Example 3 | 15 | 6 | 7 | 20 | 50 | 1.5 | 7 | 50 |
| Example 4 | 20 | 8 | 9 | 20 | 70 | 2.0 | 7 | 50 |
| Comparative Example 1 | 55 | 5 | 5 | 20 | 0.1 | 0.1 | 9 | 50 |
| Comparative Example 2 | 10 | 50 | 7 | 20 | 0.1 | 0.1 | 7 | 50 |
| Comparative Example 3 | 15 | 7 | 55 | 20 | 0.1 | 0.1 | 5 | 50 |
| Comparative Example 4 | 0.5 | 5 | 5 | 20 | 130 | 7 | 15 | 50 |
| Comparative Example 5 | 10 | 0.5 | 7 | 20 | 130 | 10 | 0.1 | 50 |
| Comparative Example 6 | 15 | 7 | 0.5 | 20 | 150 | 15 | 5 | 50 |
| Comparative Example 7 | 0.5 | 15 | 15 | 20 | 50 | 0.1 | 5 | 50 |

[Table 2]

|  | WA | WB | tA | tB | R | Tensile strength (kgf/mm$^2$) | Elongation (%) | Rz | Occurrence of wrinkle/tear |
|---|---|---|---|---|---|---|---|---|---|
| Example 1 | 12.7 | 12.3 | 8 | 7.92 | 3.18 | 56.2 | 10.2 | 0.8 | no |
| Example 2 | 12.7 | 12.5 | 8 | 7.95 | 2.53 | 51.3 | 7.5 | 0.8 | no |
| Example 3 | 12.7 | 12.5 | 8 | 7.94 | 2.10 | 58.5 | 8.6 | 0.8 | no |
| Example 4 | 12.7 | 12.4 | 8 | 7.94 | 3.17 | 57.6 | 11.2 | 0.8 | no |
| Comparative Example 1 | 12.7 | 12.1 | 8 | 7.80 | 1.91 | 35.2 | 10.5 | 2.7 | Occurance |
| Comparative Example 2 | 12.7 | 12.1 | 8 | 7.78 | 1.73 | 45.6 | 10.5 | 0.75 | Occurance |
| Comparative Example 3 | 12.7 | 12.2 | 8 | 7.84 | 1.98 | 32.7 | 10.3 | 3.1 | Occurance |
| Comparative Example 4 | 12.7 | 12.3 | 8 | 7.85 | 1.6 | 51.0 | 10.6 | 0.8 | Occurance |
| Comparative Example 5 | 12.7 | 12.2 | 8 | 7.82 | 1.7 | 34.5 | 11.1 | 2.8 | Occurance |
| Comparative Example 6 | 12.7 | 12.4 | 8 | 7.88 | 1.5 | 34.6 | 9.5 | 2.7 | Occurance |
| Comparative Example 7 | 12.7 | 12 | 8 | 7.89 | 4.0 | 50.6 | 15.0 | 0.8 | Occurance |

For the copper foils of Examples 1 to 4 and Comparative Examples 1 to 7, i) WA, ii) WB, iii) tA, iv) tB, v) R value, vi) tensile strength, vii) elongation, and viii) Rz value were measured and calculated, and ix) the occurrence of wrinkles/tears was checked.

Measurement of i) WA and ii) WB

WA and WB of the copper foil 110 were calculated using Equations 2 and 3 below.

[Equation 2]

$$WA = [XA0 + (XA45) \times 2 + XA90] / 4$$

[Equation 3]

$$WB = [XB0 + (XB45) \times 2 + XB90] / 4$$

The copper foil 110 was collected in each of three directions of 0°, 45°, and 90° with respect to an MD direction, and a uniaxial tensile test was performed for each collected copper foil under the condition of a UTM tensile test speed of 5 mm/min. At this time, the tensile test was performed until the collected copper foil has elongated by 15% after stretching compared to the copper foil before the stretching. In addition, XA0, XA45, XA90, XB0, XB45, and XB90 of the following Equations 2 and 3 may be calculated and computed by measuring a width of a central portion of each of the copper foils before the tensile test and after the tensile test.
In this case, XA0, XA45, and XA90 in Equation 2 mean widths of the central portions of the specimens, which are collected in directions of 0°, 45°, and 90°, respectively, in a stretching direction before the stretching. XB0, XB45, and XB90 in Equation 3 mean widths of the central portions of the experimental specimens, which are collected in directions of 0°, 45°, and 90°, respectively, in a stretching direction after the stretching.

Measurement of iii) tA and iv) tB

tA was obtained by measuring a thickness of the specimen before the tensile test, and tB was obtained by measuring a thickness of the specimen after the tensile test.
In this case, the tensile test was performed by an UTM.

v) Calculation of R

The R value may be obtained by calculating the above measured values of i) WA, ii) WB, iii) tA, and iv) tB according to Equation 1 below.

[Equation 1]

$$R = \log (WA / WB) / \log(tA / tB)$$

vi) Measurement of tensile strength

The tensile strength was measured using a UTM, and in this case, a width of a sample was 12.7 mm, a distance between grips was 50 mm, and a test speed was 50 mm/min.

vii) Measurement of elongation

The elongation was measured using a UTM according to regulations of the IPC-TM-650 test method manual. Specifically, the elongation was measured using a UTM manufactured by Instron Company. A width of a sample for measuring elongation was 12.7 mm, a distance between grips was 50 mm, and a test speed was 50 mm/min.

viii) Measurement of ten-point surface roughness (Rz)

The ten-point surface roughness (Rz) of the copper foil was measured using a surface roughness measurement device (M300, Mahr) in accordance with specifications of JIS B 0601-2001.

ix) Occurrence of wrinkle/tear

After 100 charge and discharge cycles, the secondary battery was disassembled to observe whether a wrinkle or a tear occurred on the copper foil. When the copper foil was wrinkled or torn, the copper foil was labeled as "occurrence," and when the copper foil was not wrinkled or torn, the copper foil was labeled as "no."

Referring to Tables 1 and 2, the following results may be confirmed.

A tear/wrinkle occurred in the copper foil of Comparative Example 1 prepared using an electrolyte including the polishing agent (component A) in an excessive amount, and the lead ions ($Pb^{2+}$) and the tungsten (W) in a small amount.

A tear/wrinkle occurred in the copper foil of Comparative Example 2 prepared using an electrolyte including a moderator (component B) in an excessive amount, and lead ions ($Pb^{2+}$) and tungsten (W) in a small amount.

A tear/wrinkle occurred in the copper foil of Comparative Example 3 prepared using the electrolyte including the leveling agent (component C) in an excessive amount, and the lead ions ($Pb^{2+}$) and the tungsten (W) in a small amount.

A tear/wrinkle occurred in the copper foil of Comparative Example 4 prepared using the electrolyte including the polishing agent (component A) in a small amount, the lead ions ($Pb^{2+}$) and the tungsten (W) in an excessive amount, and the hydrogen peroxide in an excessive amount.

A tear/wrinkle occurred in the copper foil of Comparative Example 5 prepared using the electrolyte including the moderator (component B) in a small amount, the lead ions ($Pb^{2+}$) and the tungsten (W) in an excessive amount, and the hydrogen peroxide in a small amount.

A tear/wrinkle occurred in the copper foil of Comparative Example 6 prepared using the electrolyte including the leveling agent (component C) in a small amount, and the lead ions ($Pb^{2+}$) and the tungsten (W) in an excessive amount.

A tear/wrinkle occurred in the copper foil of Comparative Example 7 prepared using the electrolyte including the polishing agent (component A) and tungsten (W) in a small amount, and the moderator (component B) and the leveling agent (component C) in an excessive amount.

Examples 5 to 10 and Comparative Examples 8 to 11

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD.

In addition, concentrations of chlorine (Cl), lead (Pb), hydrogen peroxide (H2O2), and tungsten (W), which are contained in the electrolyte 20, and a concentration of an organic additive were as shown in Table 3 below.

In the organic additive, a bis-(3-sulfopropyl)-disulfide disodium salt (SPS) was used as a polishing agent (component A), PEG was used as a moderator (component B), and ethylene thiourea (ETU) was used as a leveling agent (component C).

A current at a current density of 60 ASD was applied between the rotating anode drum 40 and the cathode plate 30 to prepare a copper film 111. Thereafter, the copper film 111 was immersed in an anticorrosion solution for about two seconds to treat a surface of the copper film 111 with chromium to form a protective layer 112, thereby preparing a copper foil 110. An anticorrosion solution containing chromic acid as a main component was used as the anticorrosion solution, and a concentration of chromic acid was 5 g/L.

As a result, copper foils of Examples 5 to 10 and Comparative Examples 8 to 11 were prepared.

[Table 3]

| | Electrolyte | | | | | | | Current density (ASD) | Electrolyte temperature (°C) |
|---|---|---|---|---|---|---|---|---|---|
| | SPS (Component A) (ppm) | PEG (Component B) (ppm) | ETU (Component C) (ppm) | Chlorine (ppm) | Lead (ppm) | Hydrogen peroxide (ml/L) | Tungsten (ppm) | | |
| Example 5 | 5 | 2 | 3 | 20 | 30 | 2 | 1.0 | 60 | 55 |
| Example 6 | 10 | 4 | 5 | 20 | 50 | 5 | 1.5 | 60 | 55 |
| Example 7 | 15 | 6 | 7 | 20 | 60 | 7 | 1.5 | 60 | 55 |

(continued)

| | | Electrolyte | | | | | | | Curr ent dens ity (AS D) | Electrol yte tempera ture (°C) |
|---|---|---|---|---|---|---|---|---|---|---|
| | | SPS (Comp onent A) (ppm) | PEG (Comp onent B) (ppm) | ETU (Comp onent C) (ppm) | Chlorine (ppm) | Lead (ppm) | Hydroge n peroxide (ml/L) | Tungs ten (ppm) | | |
| Exampl e 8 | | 20 | 8 | 9 | 20 | 70 | 7 | 2.0 | 60 | 55 |
| Exampl e 9 | | 13 | 5 | 4 | 20 | 50 | 7 | 2.0 | 60 | 55 |
| Exampl e 10 | | 8 | 7 | 6 | 20 | 50 | 7 | 2.2 | 60 | 55 |
| Compar ative Exampl e 8 | | 55 | 5 | 5 | 20 | 0.1 | 9 | 0.1 | 60 | 55 |
| Compar ative Exampl e 9 | | 10 | 50 | 7 | 20 | 150 | 7 | 0.1 | 60 | 55 |
| Compar ative Exampl e 10 | | 15 | 7 | 55 | 20 | 150 | 5 | 10 | 60 | 55 |
| Compar ative Exampl e 11 | | 10 | 5 | 55 | 20 | 50 | 15 | 2.0 | 60 | 55 |

[Table 4]

| | | Room tempera ture storage modulu s (E') (GPa) | Room tempera ture loss modulu s (E") (GPa) | Room tempera ture loss factor (E"/E') | High-tempe rature storage modulus (E') (GPa) | High-tempe rature loss modulus (E") (GPa) | High- tempe rature loss factor (E"/E') | Occurre nce of wrinkle/ tear |
|---|---|---|---|---|---|---|---|---|
| Example 5 | | 44.00 | 0.98 | 0.0223 | 32.15 | 4.58 | 0.142 | no |
| Example 6 | | 58.12 | 2.79 | 0.0480 | 27.96 | 5.57 | 0.199 | no |
| Example 7 | | 64.38 | 1.68 | 0.0261 | 40.86 | 5.25 | 0.128 | no |
| Example 8 | | 65.06 | 1.67 | 0.0257 | 51.83 | 6.30 | 0.122 | no |
| Example 9 | | 54.29 | 1.74 | 0.0321 | 35.63 | 6.79 | 0.191 | no |
| Example 10 | | 70.70 | 3.02 | 0.0427 | 32.61 | 4.68 | 0.144 | no |
| Compara tive Example 8 | | 42.78 | 3.15 | 0.0736 | 53.21 | 10.82 | 0.203 | Occuran ce |

(continued)

| | Room tempera ture storage modulu s (E') (GPa) | Room tempera ture loss modulu s (E") (GPa) | Room tempera ture loss factor (E"/E') | High-tempe rature storage modulus (E') (GPa) | High-tempe rature loss modulus (E") (GPa) | High-tempe rature loss factor (E"/E') | Occurre nce of wrinkle/ tear |
|---|---|---|---|---|---|---|---|
| Compara tive Ex- ample 9 | 71.82 | 4.25 | 0.0592 | 58.40 | 12.48 | 0.214 | Occuran ce |
| Compara tive Example 10 | 40.28 | 3.14 | 0.0780 | 25.44 | 4.22 | 0.166 | Occuran ce |
| Compara tive Example 11 | 72.32 | 3.87 | 0.0535 | 60.24 | 13.84 | 0.230 | Occuran ce |

For the copper foils manufactured according to Examples 5 to 10 and Comparative Examples 8 to 11 as described above, i) room temperature storage modulus (E'), ii) room temperature loss modulus (E"), iii) room temperature loss factor, iv) high-temperature storage modulus (E'), v) high-temperature loss modulus (E"), vi) high-temperature loss factor, and vii) occurrence of wrinkles/tears were checked.

Measurement of i) room temperature storage modulus (E') and ii) room temperature loss modulus (E")

The copper foil 110 was cooled to 20 °C and then heated to 500 °C at a heating rate of 5 °C/min, and the viscoelasticity thereof was measured using Seiko Exstar 6000 (DMA/SS6100) from Seiko at a vibration frequency of 1Hz.
The room temperature storage modulus (E') and the room temperature loss modulus (E") at 25 °C were calculated from the obtained viscoelastic curve.

iii) Calculation of room temperature loss factor (E"/E')

The room temperature loss factor (E"/E') may be obtained by calculating values of the measured i) room temperature storage modulus (E") and ii) room temperature loss modulus (E') according to Equation 4 below.

Room temperature loss factor = room temperature loss modulus/room temperature storage modulus    [Equation 4]

Measurement of iv) high-temperature storage modulus (E') and v) high-temperature loss modulus (E")

The high-temperature storage modulus (E') and the high-temperature loss modulus (E") were measured in the same manner as the room temperature storage modulus (E') and the room temperature loss modulus (E'), except that the high-temperature storage modulus (E') and the high-temperature loss modulus (E") were measured after heating the copper foil 110 at 350 °C for one hour.

vi) Calculation of high-temperature loss factor (E"/E')

The high-temperature loss factor (E"/E') may be obtained by calculating values of the measured i) high-temperature storage modulus (E") and ii) high-temperature loss modulus (E') according to Equation 5 below.

High-temperature loss factor = high-temperature loss modulus/high-temperature storage modulus    [Equation 5]

vii) Occurrence of wrinkle/tear

After 100 charge and discharge cycles, the secondary battery was disassembled to observe whether a wrinkle or a tear occurred on the copper foil. When the copper foil was wrinkled or torn, the copper foil was labeled as "occurrence," and when the copper foil was not wrinkled or torn, the copper foil was labeled as "no."
Referring to Tables 3 and 4, the following results may be confirmed.

A tear/wrinkle occurred in the copper foil of Comparative Example 8 prepared using an electrolyte including a polishing agent (component A) in an excessive amount, and lead and tungsten in small amounts.

A tear/wrinkle occurred in the copper foil of Comparative Example 9 prepared using an electrolyte including a moderator (component B) and lead in excessive amounts, and tungsten in a small amount.

A tear/wrinkle occurred in the copper foil of Comparative Example 10 prepared using an electrolyte including a leveling agent (component C), lead, and tungsten in excessive amounts.

A tear/wrinkle occurred in the copper foil of Comparative Example 11 prepared using an electrolyte including a leveling agent (component C) and hydrogen peroxide in excessive amounts.

On the other hand, all the copper foils of Examples 5 to 10 according to the present disclosure satisfied values within the above standard ranges, resulting in no tears/wrinkles occurred in the copper foil.

It will be apparent to those skilled in the art that the present disclosure described above is not limited by the above-described embodiments and the accompanying drawings and that various substitutions, modifications, and variations can be made in the present disclosure without departing from the spirit and scope of the present disclosure. Accordingly, the scope of the present disclosure is defined by the accompanying claims, and it is intended that all variations and modifications derived from the meaning, scope, and equivalent concept of the claims fall within the scope of the present disclosure.

**Claims**

1. A copper foil comprising a copper film including 99.9 wt% or more of copper,

   wherein the copper foil has an R value in a range of 2.0 to 3.5,
   wherein R is calculated by Equation 1 below, [Equation 1]

   $$R = \log (WA / WB) / \log(tA / tB)$$

   wherein WA in Equation 1 is calculated using Equation 2 below, [Equation 2]

   $$WA = [XA0 + (XA45) \times 2 + XA90] / 4$$

   WB in Equation 1 is calculated using Equation 3 below, [Equation 3]

   $$WB = [XB0 + (XB45) \times 2 + XB90] / 4$$

   tA in Equation 1 means a thickness of a specimen before a tensile test,
   tB in Equation 1 means a thickness of the specimen after the tensile test,
   XA0, XA45, and XA90 in Equation 2 mean widths of central portions of specimens, which are collected in directions of 0°, 45°, and 90°, respectively, in a stretching direction before stretching, and
   XB0, XB45, and XB90 in Equation 3 mean widths of the central portions of the specimens, which are collected in directions of 0°, 45°, and 90°, respectively, in the stretching direction after the stretching.

2. The copper foil of claim 1, wherein the copper foil has a tensile strength of 45 kgf/mm$^2$ or more.

3. The copper foil of claim 1, wherein the copper foil has an elongation of 3% to 13%.

4. The copper foil of claim 1, wherein the copper foil has a ten-point average roughness (Rz) of 0.7 $\mu$m to 0.9 $\mu$m.

5. The copper foil of claim 1, further comprising a protective layer formed on the copper film.

6. The copper foil of claim 5, wherein the protective layer includes at least one of a chromium compound, a silane compound, and a nitrogen compound.

7. A method for manufacturing a copper foil, the method comprising:

preparing an electrolyte containing copper ions;
forming a copper film; and
forming a protective layer on the copper film,
wherein the forming of the copper film includes forming the copper film on a rotating anode drum by electrically conducting a cathode plate and the rotating anode drum, which are disposed to be spaced apart from each other in the electrolyte in an electrolytic bath,
wherein the electrolyte includes:

copper ions at a concentration of 70 g/L to 100 g/L;
sulfuric acid at a concentration of 70 g/L to 150 g/L;
chlorine (Cl) at a concentration of 15 ppm to 25 ppm;
lead ions ($Pb^{2+}$) at a concentration of 1 ppm to 100 ppm;
tungsten (W) at a concentration of 0.3 ppm to 5 ppm;
hydrogen peroxide at a concentration of 1 ml/L to 10 ml/L; and
an organic additive,
wherein the organic additive includes at least one of a polishing agent (component A), a moderator (component B), a leveling agent (component C),
wherein the polishing agent (component A) includes sulfonic acid or a metal salt thereof,
the moderator (component B) includes a non-ionic water-soluble polymer, and
the leveling agent (component C) includes at least one of nitrogen (N) and sulfur (S).

8. The method of claim 7, wherein the polishing agent (component A) has a content of 1 ppm to 25 ppm.

9. The method of claim 7, wherein the moderator (component B) has a content of 1 ppm to 10 ppm.

10. The method of claim 7, wherein the leveling agent (component C) has a content of 1 ppm to 10 ppm.

11. A copper foil comprising a copper film including 99.9 wt% or more of copper,

wherein the copper film has a room temperature loss factor of 0.05 or less,
wherein the room temperature loss factor is calculated by Equation 4 below, room temperature loss factor = room temperature loss modulus/room temperature storage modulus. [Equation 4]

12. The copper foil of claim 11, wherein the copper film has a high-temperature loss factor of 0.2 or less, wherein the high-temperature loss factor is calculated by Equation 5 below, high-temperature loss factor = high-temperature loss modulus/high-temperature storage modulus. [Equation 5]

13. The copper foil of claim 11, wherein the room temperature storage modulus is in a range of 30 GPa to 80 GPa.

14. The copper foil of claim 11, wherein the room temperature loss modulus is 5 GPa or less.

15. The copper foil of claim 12, wherein the high-temperature storage modulus is in a range of 20 GPa to 60 GPa.

16. The copper foil of claim 12, wherein the high-temperature loss modulus is 10 GPa or less.

17. The copper foil of claim 11, further comprising a protective layer formed on the copper film.

18. The copper foil of claim 17, wherein the protective layer includes at least one of a chromium compound, a silane compound, and a nitrogen compound.

# FIG. 1

110

112
111

# FIG. 2

110

112
111
112

# FIG. 3

100

# FIG. 4

100

# FIG. 5

# FIG. 6

## INTERNATIONAL SEARCH REPORT

| International application No. |
| --- |
| **PCT/KR2023/018609** |

| A. | CLASSIFICATION OF SUBJECT MATTER |
| --- | --- |

**C25D 1/04**(2006.01)i; **C25D 3/38**(2006.01)i; **C25D 17/12**(2006.01)i; **C23C 28/00**(2006.01)i; **C23F 11/18**(2006.01)i; **H01M 4/66**(2006.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

C25D 1/04(2006.01); C22C 9/00(2006.01); C25D 1/00(2006.01); C25D 3/38(2006.01); H01M 10/052(2010.01); H01M 4/13(2010.01); H01M 4/66(2006.01); H05K 1/03(2006.01); H05K 3/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동박(copper foil), 구리막(copper layer), 인장시험(tensile test), 두께(thickness), 전해액(electrolyte), 보호층(protective layer), 납(plumbum), 텅스텐(tungsten), 과산화수소(hydrogen peroxide), 손실계수(loss coefficient)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0067247 A (SK NEXILIS CO., LTD.) 08 June 2021 (2021-06-08)<br>See paragraphs [0057], [0062], [0136] and [0182]-[0197], claims 9, 13 and 15 and figure 1. | 1-18 |
| A | KR 10-1669087 B1 (FURUKAWA ELECTRIC CO., LTD.) 25 October 2016 (2016-10-25)<br>See paragraphs [0092]-[0107], [0141], [0147]-[0149], [0152], [0216]-[0217] and [0240]-[0241] and claim 15. | 1-18 |
| A | JP 2013-091825 A (FURUKAWA ELECTRIC CO., LTD.) 16 May 2013 (2013-05-16)<br>See claims 1-3. | 1-18 |
| A | CN 114126202 A (HUAWEI TECHNOLOGY CO., LTD.) 01 March 2022 (2022-03-01)<br>See paragraphs [0045]-[0053] and figure 1. | 1-18 |
| A | KR 10-2019-0023382 A (KCF TECHNOLOGIES CO., LTD.) 08 March 2019 (2019-03-08)<br>See claims 1-9. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 February 2024** | **28 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2023/018609** |

| Patent document cited in search report | | | Publication date (day/month/year) | Patent family member(s) | | | Publication date (day/month/year) |
|---|---|---|---|---|---|---|---|
| KR | 10-2021-0067247 | A | 08 June 2021 | None | | | |
| KR | 10-1669087 | B1 | 25 October 2016 | CN | 103348041 | A | 09 October 2013 |
| | | | | CN | 103348041 | B | 12 October 2016 |
| | | | | EP | 2660359 | A1 | 06 November 2013 |
| | | | | JP | 2013-028848 | A | 07 February 2013 |
| | | | | JP | 2013-095954 | A | 20 May 2013 |
| | | | | JP | 2013-185228 | A | 19 September 2013 |
| | | | | JP | 2013-204088 | A | 07 October 2013 |
| | | | | KR | 10-2015-0097821 | A | 26 August 2015 |
| | | | | TW | 201323664 | A | 16 June 2013 |
| | | | | TW | I496954 | B | 21 August 2015 |
| | | | | US | 2014-0045061 | A1 | 13 February 2014 |
| | | | | US | 9890463 | B2 | 13 February 2018 |
| | | | | WO | 2013-018773 | A1 | 07 February 2013 |
| JP | 2013-091825 | A | 16 May 2013 | JP | 5730742 | B2 | 10 June 2015 |
| CN | 114126202 | A | 01 March 2022 | None | | | |
| KR | 10-2019-0023382 | A | 08 March 2019 | KR | 10-2399930 | B1 | 18 May 2022 |

Form PCT/ISA/210 (patent family annex) (July 2022)